# EUROPEAN PATENT APPLICATION

(11) **EP 3 496 224 A2**
(43) Date of publication of application: **12.06.2019**
(21) Application number: 18209768.3
(22) Date of filing: 03.12.2018
(51) Int. Cl.: H02J 1/12, H02J 3/38, H02S 40/36

(54) **SYSTEMS AND METHOD FOR ELECTRICAL POWER DISTRIBUTION IN SOLAR POWER PLANTS**

(30) Priority: 05.12.2017 US 201715831871
(71) Applicant: General Electric Company, Schenectady, NY 12345 (US)
(72) Inventor: YAN, Min, Niskayuna, NY New York 12309 (US); NDIAYE, Ibrahima, Niskayuna, NY New York 12309 (US); SHE, Xu, Niskayuna, NY New York 12309 (US); DATTA, Rajib, Niskayuna, NY New York 12309 (US)
(74) Representative: Fischer, Michael Maria

(57) **Abstract**

A power generation architecture includes a plurality of photovoltaic blocks (42) and a medium voltage direct current MVDC electrical power collector (50). Each photovoltaic (PV) block (42) includes a plurality of PV groups and a combiner (16). Each plurality of PV groups includes a plurality of PV strings (14) and a DC to DC power converter (40). Each PV string (14) is operable to output low voltage, DC electrical power. The DC to DC power converter (40) is operable to convert the low voltage, DC electrical power to medium voltage, DC electrical power. The combiner (16) is operable to combine the medium voltage DC electrical power of the DC to DC power converters (40) to produce a block output. The MVDC collector (50) is operable to combine each block output.

## Description

### BACKGROUND

The field of the disclosure relates generally to solar power plants and more particularly to the distribution of electrical power within a solar power plant.

Solar power plants harvest sunlight to generate electrical power. Specifically, solar power plants may convert the solar energy in sunlight directly into electrical power using photovoltaic (PV) cells. Alternatively, solar power plants may use the sunlight indirectly as a heat source to produce electrical power.

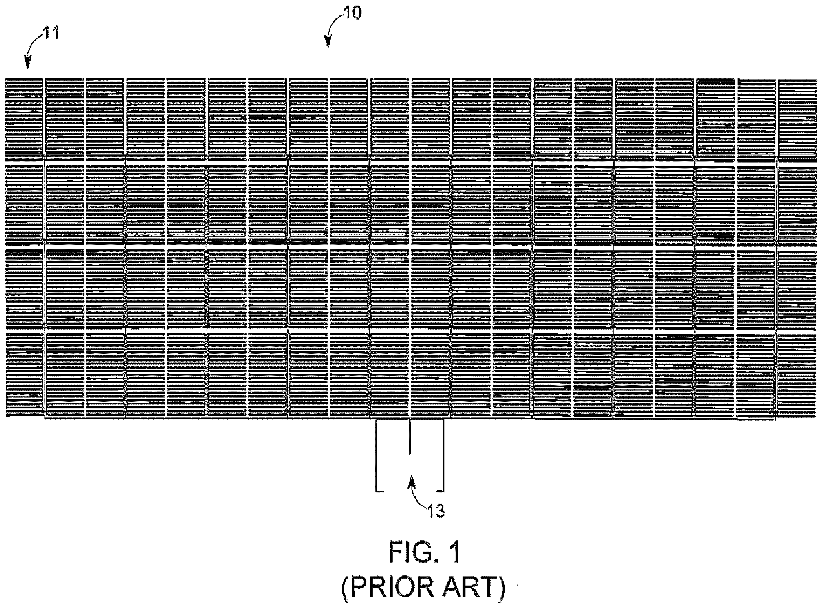

FIG. 1 illustrates a schematic diagram of a layout of a known one hundred megawatt PV solar power plant 10. Solar power plant 10 is divided into a plurality of PV power blocks 11. In the example of FIG. 1, solar power plant 10 includes forty PV power blocks 11, each PV power block 11 producing 2.5 megawatts of power. The power from each PV power block 11 is delivered to a power substation 13, where the power is converted to match the requirements of a power grid (not shown) connected to solar power plant 10.

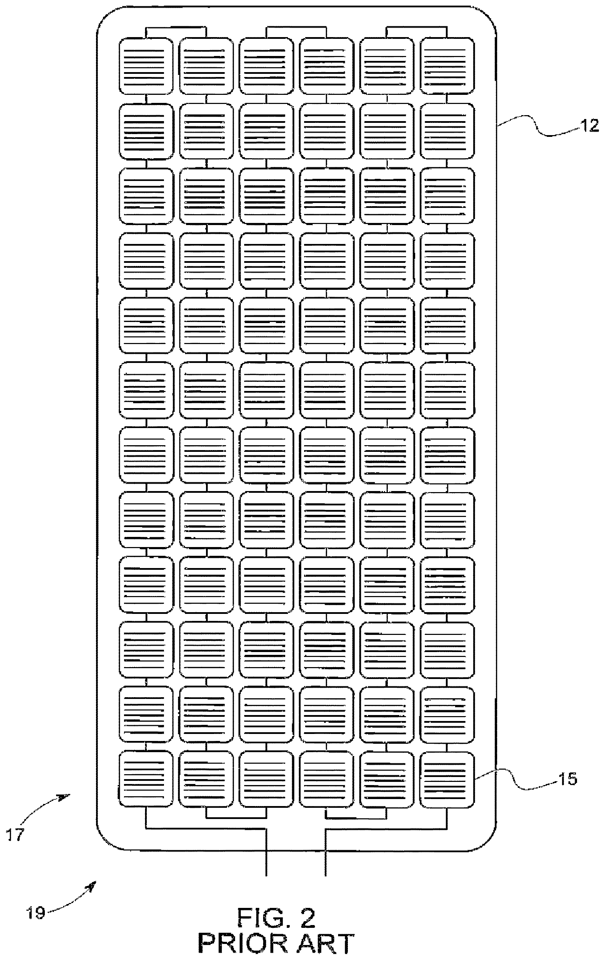

FIG. 2 illustrates a schematic diagram of a known PV module 12 for use in a PV power plant such as solar power plant 10 (shown in FIG. 1). PV module 12 includes a plurality of PV cells 15 that are electrically coupled in series with one another. The plurality of PV cells 15 are arranged in twelve rows 17 and six columns 19, for a total of seventy-two PV cells 15 electrically connected in series. Each PV cell 15 is operable to convert photons from received light into electricity. Each PV cell 15 produces a low voltage as photons are absorbed, such as approximately 0.75 volts (V) when exposed to sunlight with no load. Because each PV cell is connected in series, the current is constant throughout the PV cells 15 while the voltage is additive. Thus, PV module 12 may produce an open circuit voltage of approximately 72 x 0.75 V, or 54 V. At full power, the voltage drops about 70% (e.g., to 38 V) with a current of about 9 amps (A) to produce a nominal maximum power of 342 watts (W) per PV module 12.

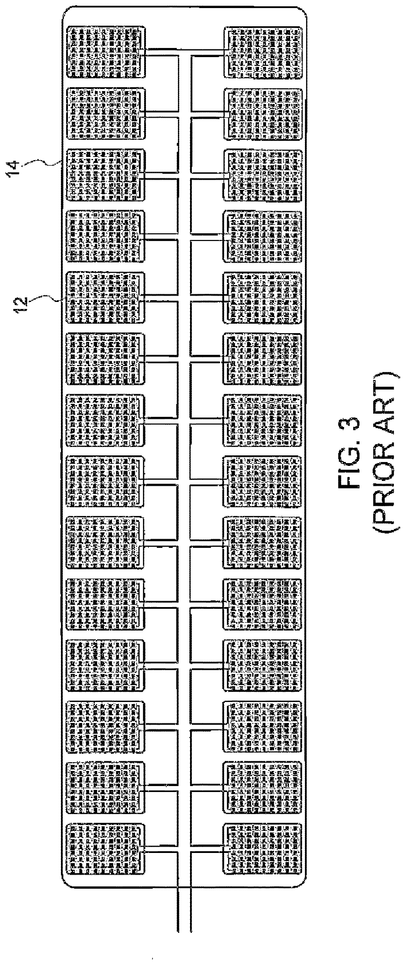

FIG. 3 illustrates a schematic diagram of a known PV string 14. Specifically, each PV module 12 is electrically connected in series with other PV modules 12 to form PV string 14. PV string 14 may contain twenty-eight PV modules 12 connected in series, resulting in a nominal voltage of about 1491 V with no load. At a maximum power of about 9.1 Kilowatts per PV string 14, the voltage drops to about 1,042 V with a current of about 9 amps.

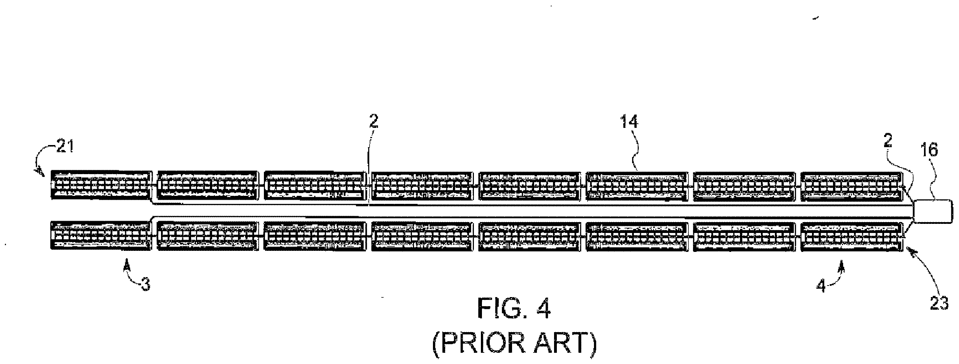

FIG. 4 illustrates a schematic of first row 21 and a second row 23 that form a portion of PV power block 11. Each string row 21, 23 includes eight PV strings 14 for a total of sixteen PV strings 14. PV strings 14 are electrically connected in parallel to a combiner box 16, which combines output currents of PV strings 14. Each PV string 14 is connected to combiner box 16 using a pair of low voltage direct current (LVDC) cable 2 (for clarity, LVDC cable 2 is shown only for farthest strings 3 and nearest strings 4). Thus, combiner box 16 for two rows 21, 23 of PV strings 14 requires sixteen pairs of LVDC cables 2. Because PV strings 14 are connected in parallel, the voltage does not increase, but the current is cumulative. For example, combiner box 16 may combine the output of sixteen PV strings 14 to produce a total output of about 145.6 kilowatts at about 1,042 V and about 140 A.

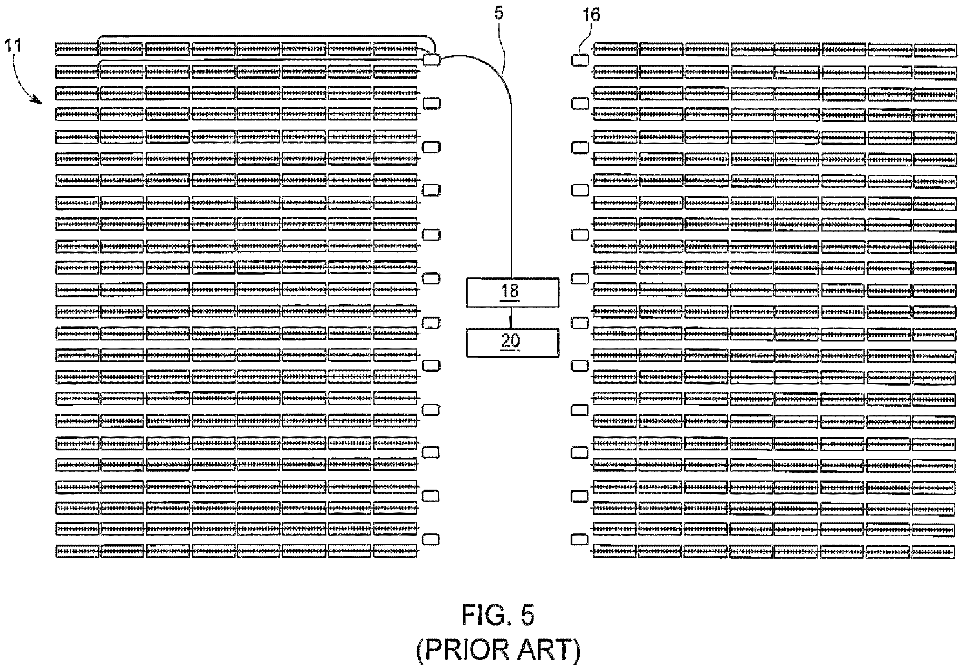

FIG. 5 illustrates a schematic diagram of PV power block 11. PV power block 11 includes two sets of twenty-four rows of PV strings 14 feeding twelve combiner boxes 16. An output of the combiner boxes 16 is connected to a block inverter 18 in parallel. Thus, twelve combiner boxes 16 may use twelve pairs of LVDC cables 5 to connect to block inverter 18 (for clarity, only a single pair of LVDC cables 5 is shown). Block inverter 18 converts the DC power produced by the PV cells to AC power, and a block transformer 20 steps up the AC voltage for transmitting to substation 13.

Solar power plant 10 has various drawbacks. U.S. Patent Publication 2016/0099572A1 details the drawbacks for the above mentioned standard utility scale solar plant design. For example, each PV string 14 is connected to combiner box 16 in parallel. This requires using relatively long (tens of meters to hundreds of meters) LVDC cables 2 for each PV string 14. Furthermore, typical utility scale PV plants have tens of thousands of PV strings 14 each requiring separate LVDC cables 2. The high number of LVDC cables 2 results in significant costs and resistive power losses. In addition, LVDC cables 5 coupled between the combiner boxes 16 and the block inverter 18 transmit the DC power to block inverter 18. Due to the relatively low DC voltage, the typical current on these LVDC cables 5 can be relatively high (100s A), requiring the use of large gauge LVDC cable and incurring significant power loss.

### BRIEF DESCRIPTION

In one aspect, a power generation architecture for a photovoltaic power plant includes a plurality of photovoltaic blocks and a medium voltage direct current collector. Each plurality of photovoltaic blocks includes a plurality of photovoltaic groups and a combiner. Each plurality of photovoltaic groups includes a plurality of photovoltaic strings and a direct current (DC) to DC power converter. Each photovoltaic string is operable to output low voltage, direct current (LVDC) electrical power at a string output. Each DC to DC power converter is electrically coupled to the string output of each photovoltaic string and is operable to convert the LVDC electrical power to medium voltage, direct current (MVDC) electrical power at a converter output. The combiner has a combiner input in electrical communication with each of the converter outputs of the plurality of photovoltaic groups and is operable to combine the MVDC electrical power received at the combiner input to produce a block output. The collector includes a collector input electrically coupled to each combiner output and operable to combine each block output.

In another aspect, a power generation architecture for use in a photovoltaic power plant is provided. The architecture includes a first photovoltaic group including a first plurality of photovoltaic strings and a first direct current (DC) to DC converter having an input electrically coupled to each photovoltaic string of the first plurality of photovoltaic strings. The architecture further includes a second photovoltaic group including a second plurality of photovoltaic strings and a second DC to DC converter having an input electrically coupled to each photovoltaic string of the second plurality of photovoltaic strings. The first photovoltaic group and the second photovoltaic group are physically arranged in a row and the first DC to DC power converter and the second DC to DC power converter are connected in a ring electrical connection.

### DRAWINGS

These and other features, aspects, and advantages of the present disclosure will become better understood when the following detailed description is read with reference to the accompanying drawings in which like characters represent like parts throughout the drawings, wherein:
FIG. 1 illustrates a schematic diagram of a known PV power plant.
FIG. 2 illustrates a schematic diagram of a known PV power module that may be used with the PV power plant shown in FIG. 1.
FIG. 3 illustrates a schematic diagram of a known PV string that may be used with the PV power plant shown in FIG. 1.
FIG. 4 illustrates a schematic diagram of rows of a known PV power block.
FIG. 5 illustrates a schematic diagram of a power block.
FIG. 6 illustrates a schematic diagram of an exemplary string layout.
FIG. 7 illustrates a schematic diagram of rows of a PV power plant implemented using the string layout of FIG. 6.
FIG. 8 illustrates a schematic diagram of a PV power block of a PV power plant implanted using the string layout of FIG. 6.
FIG. 9 illustrates a schematic diagram of an exemplary PV power plant.
FIG. 10 illustrates an exemplary connector that serves both as a cable termination and as a quick disconnector to local DC/DC converters.

Unless otherwise indicated, the drawings provided herein are meant to illustrate features of embodiments of the disclosure. These features are believed to be applicable in a wide variety of systems comprising one or more embodiments of the disclosure. As such, the drawings are not meant to include all conventional features known by those of ordinary skill in the art to be required for the practice of the embodiments disclosed herein.

### DETAILED DESCRIPTION

In the following specification and the claims, reference will be made to a number of terms, which shall be defined to have the following meanings.

The singular forms "a", "an", and "the" include plural references unless the context clearly dictates otherwise.

"Optional" or "optionally" means that the subsequently described event or circumstance may or may not occur, and that the description includes instances where the event occurs and instances where it does not.

Approximating language, as used herein throughout the specification and claims, may be applied to modify any quantitative representation that could permissibly vary without resulting in a change in the basic function to which it is related. Accordingly, a value modified by a term or terms, such as "about" and "substantially", are not to be limited to the precise value specified. In at least some instances, the approximating language may correspond to the precision of an instrument for measuring the value. Here and throughout the specification and claims, range limitations may be combined and/or interchanged, such ranges are identified and include all the sub-ranges contained therein unless context or language indicates otherwise.

Throughout this application, reference will be made to low voltage, medium voltage, and high voltage. Low voltage is considered to be voltage up to approximately 1,500V, medium voltage is considered to be voltage between approximately 1,500 V and 35kV, and high voltage is considered to be voltage between approximately 35kV and 230kV.

Throughout this application, reference will be made to a ring electrical connection. A ring electrical connection is a variation of a parallel electric circuit. In place of using radial leads in parallel, the ring connection connects terminals of adjacent sources. For example, a group of batteries would each have their positive terminals electrically coupled to one another and their negative terminals electrically coupled to one another. A single pair of leads may then be used at any battery terminal to tap the electrical power.

Embodiments of the present disclosure relate to photovoltaic power plants. The photovoltaic power plants described herein include a configuration of photovoltaic strings that results in reduced material costs for constructing the plant as compared to at least some known string configurations. The string configuration described herein employs medium voltage direct current (MVDC) DC/DC converters to reduce the amount of wiring required.

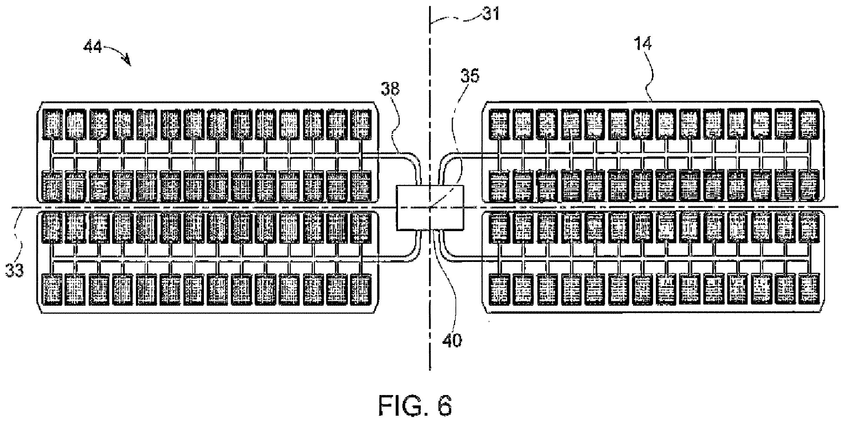

FIG. 6 illustrates a schematic diagram of an exemplary layout 44 of a group of PV strings 14. A PV string 14, as used herein, refers to a grouping of PV modules 12 connected in a series electrical connection. A PV module 12, as used herein, refers to a grouping of PV cells 15 electrically coupled to one another and sharing a common support structure. In the exemplary embodiment, layout 44 includes four PV strings 14 that supply electrical power to one local DC/DC converter 40. PV strings 14 may be arranged symmetrically, with symmetry about a first axis 31 and a second axis 33. PV strings 14 may be arranged in a rectangle. Local DC/DC converter 40 may be located between PV strings 14 (e.g. along axes of symmetry 31, 33 or at an intersection 35 of first axis 31 and second axis 33) minimizing the length of LVDC cables 38 electrically coupling PV strings 14 and local DC/DC converter 40. Because local DC/DC converter 40 is centrally located and PV strings 14 are arranged symmetrically, each LVDC cable 38 may have the same length. Thus, identical LVDC cables may be used to electrically connect any PV string 14 to local DC/DC converter 40. Local DC/DC converter 40 subsequently steps up the LVDC voltage output from PV strings 14 to MVDC voltage levels. For example, a 1,042 V DC output of a single PV string 14 may be converted to approximately 20,000 VDC with a current of approximately .46 A using local DC/DC converter 40. Accordingly, the output of four PV strings 14 would be approximately 20,000 VDC with a current of 1.8 A. The higher relative voltage reduces the amount of electric current carried in any subsequent cabling by an order of magnitude.

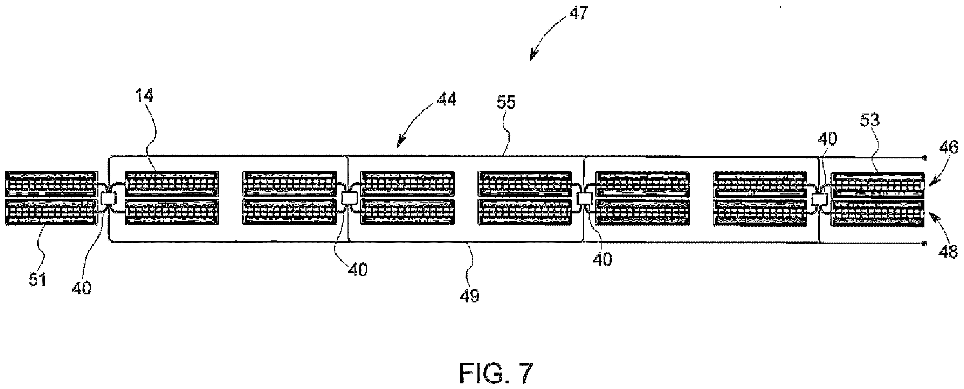

FIG. 7 illustrates a schematic diagram of a layout 47 of two rows 46, 48 of a PV block 42 using exemplary layouts 44 of groups of PV strings 14. A first row 46 includes eight PV strings 14 and a second row 48 includes eight PV strings 14. Together, rows 46, 48 include sixteen PV strings 14 and four local DC/DC converters 40 with each layout 44 of four PV strings 14 electrically coupled to a local DC/DC converter 40. Local DC/DC converters 40 are each electrically connected in a ring electrical connection using a pair of MVDC cables 49, 55. Connecting local DC/DC converters 40 in a ring electrical connection results in increased current relative to a single DC/DC converter 40, but reduces the amount of MVDC cable 49 required for a given row. For example, rows 46, 48 may together produce an output of approximately 20,000 VDC with a current of 7.3 A. In contrast, traditional PV rows 21, 23 (shown in FIG. 2) output approximately 1,042 V and approximately 140 A each, and combined traditional PV rows 21, 23 output approximately 1,042 V and approximately 280 A.

Furthermore, because a MVDC cable carries less current than a LVDC cable, a MVDC cable experiences significantly lower power losses per length than a LVDC cable. As a result, a length of rows 46, 48 may be extended significantly by adding additional layouts 44 without incurring significant voltage drops/power losses. Current rows, such as rows 21, 23 are limited in length by the length of LVDC cable 2 required for the farthest PV string 14 (i.e. the PV string 14 farthest from the combiner box 16). If PV string 14 is too far away, the power losses in the LVDC cable become excessive. For example, most conventional PV power plants have rows 21, 23 of eight PV strings 14. However, using layout 44, a farthest string 53 uses the same length of LVDC cable 38 as a nearest string 53. For example, rows 46, 48 could be extended to sixteen PV strings 14 (for thirty-two total strings) without incurring significant voltage drops and/or power losses.

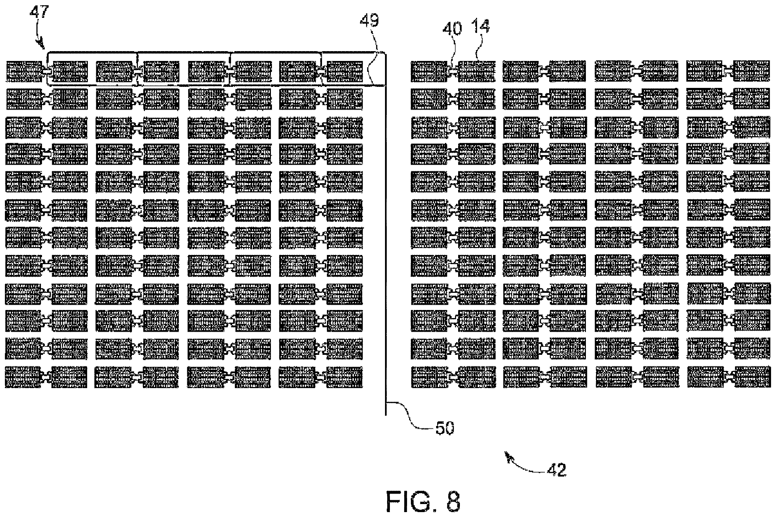

FIG. 8 illustrates a schematic diagram of a PV power block 42 using multiple layouts 47 of rows of PV strings 14. PV power block 42 includes forty-eight rows of PV strings 14 (i.e., twenty-four for each side) and ninety-six local DC/DC converters 40. In the exemplary embodiment, output of layout 47 is electrically connected to a block collector 50 (only one electrical connection of layout 47 is shown for clarity). Because the output of each layout 47 is MVDC with relatively low current, the output may be collected in a ring electrical connection without requiring a high current capacity of block collector 50. For example, the total current of forty-eight rows may be approximately 174.7 A, which is comparable to the current of a single row of a traditional PV power plant. This electrical power may be delivered to a power substation 52 using a conventional distribution system 56.

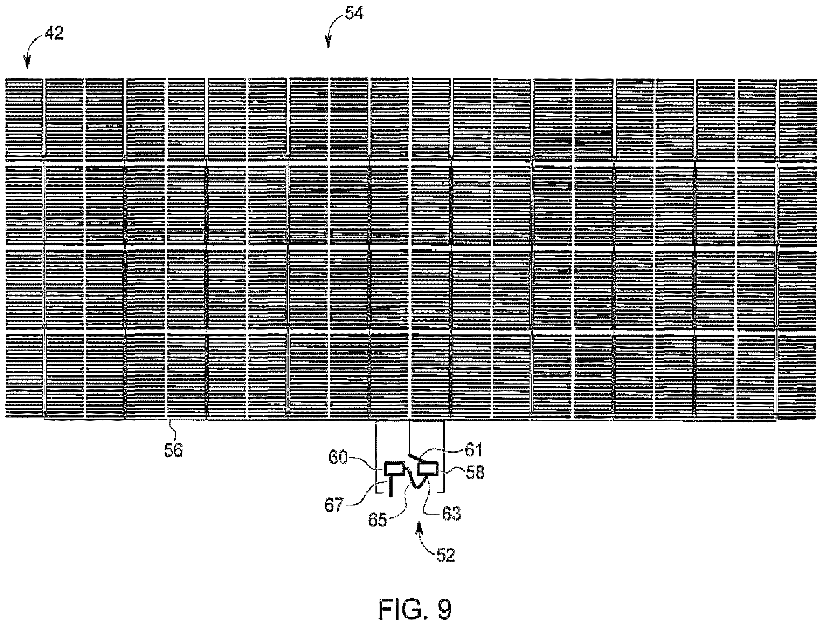

FIG. 9 illustrates a schematic diagram of an exemplary PV power plant 54. PV power plant 54 includes a plurality of PV power blocks 42, an electrical distribution system 56, and a power substation 52. Each PV power block 42 is electrically coupled to power substation 52 through electrical distribution system 56. Electrical distribution system 56 may connect each PV power block 42 to power substation 52 in a parallel electrical connection, or in some embodiments, groups of PV power blocks 42 may be connected in a ring electrical connection.

Power substation 52 includes an inverter 58 and a transformer 60 in the exemplary embodiment. Inverter 58 includes an input 61 in electrical communication with electrical distribution system 56 and an output 63 in electrical communication with an input 65 of transformer 60. Inverter 58 is operable to convert DC power received from electrical distribution system 56 to AC power. Inverter 58 may be silicon carbide based to operate at higher frequencies and temperatures compared to silicon based power electronics. Transformer 60 includes an input 65 in electrical communication with inverter 58 and an output 67 configured to connect to a power grid (not shown). Transformer 60 is operable to convert the AC power output by inverter 58 into a voltage compatible with the power grid.

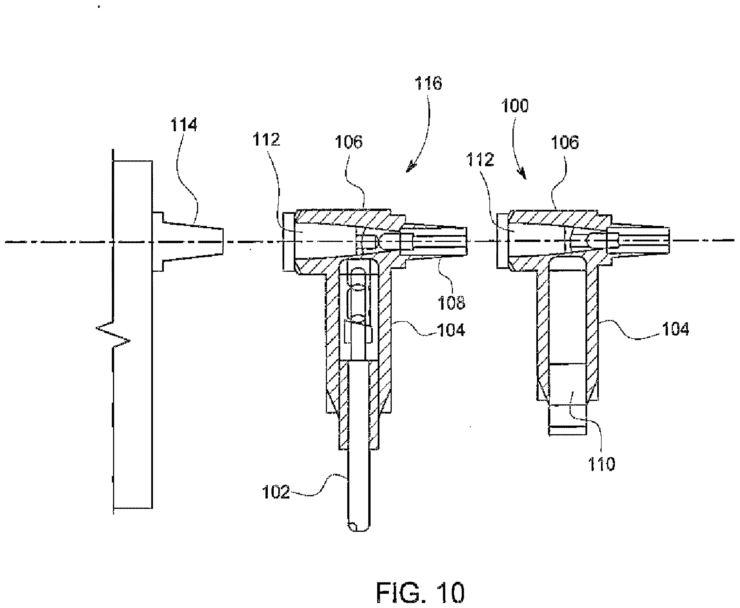

Exemplary embodiments require using multiple MVDC cables. Compared to a conventional PV power plant design, MVDC terminations may be a relatively significant cost due to the increased number of MVDC cables in the exemplary embodiments. FIG. 10 illustrates an exemplary connector 100 that serves both as a cable termination and as a quick disconnector to local DC/DC converters 40. Connector 100 includes a body portion 104 with a cable aperture 110 sized and shaped to receive MVDC cable 102. MVDC cable 102 is secured within cable aperture 110 using conventional techniques such as a compression fitting. Connector 100 further includes a head portion 106 having a lug aperture 112 sized and shaped to receive a lug 114 of an electrical component. Lug aperture 112 may be secured to lug 114 using conventional techniques. Head portion 106 includes a lug 108 opposite lug aperture 112. Lug 108 is sized and shaped to simulate a standard electrical lug 114. Cable aperture 110, lug aperture 112, and lug 108 are each in electrical connection with one another. A MVDC cable 102 may be electrically coupled to an electrical component by coupling MVDC cable 102 to cable aperture 110 and lug aperture 112 to lug 114 of electrical component.

In addition to connecting to local DC/DC converters 40, quick disconnector allows piggybacking of connections as shown in FIG. 10. Connector 100 may be coupled to an existing connector 116 by coupling lug aperture 112 of connector 100 to lug 108 of existing connector 116.

Connector 100 offers safe isolation of local DC/DC converter 40 from the rest of the PV plant and allows safe access to local DC/DC converter 40 for maintenance, repair or replacement. The multifunctional nature of connector 100 also further reduces the hardware cost by eliminating the need for a separate junction box.

The following table details the distribution cost of an example architecture of a conventional PV power plant 10 having a block inverter 18 and block transformer 20 for each PV power block 11 as shown in FIGS. 1-5. The cost is derived as the total cost of the components divided by the rated capacity of a power plant.

| | LVDC cable, Misc | Combiner box | LVDC cable to skid | Inverter skid | Ring main unit | MVAC cable within section | MVAC cable section to switch gear | MVAC switch gear | Tsfm + SF6 + substatio n+ SCADA | Total |
|---|---|---|---|---|---|---|---|---|---|---|
| Cost (¢ per W) | **4.1** | **1.1** | **1.2** | **6.3** | **0.1** | **0.8** | **0.3** | **0.4** | **2.5** | **16.8** |

The category "LVDC cable, Misc" includes the LVDC cables that are required to connect the individual photovoltaic strings to the combiner box. This category further includes the cable connectors that are used to quickly connect sections of LVDC cables to enable fast installation. "The combiner box" refers to the electrical combiner box that combine LVDC cables from multiple photovoltaic strings, provides electrical protection such as electrical fuse for each individual photovoltaic string and quick electrical disconnect function to allow fast isolating the string assembly from the rest of the PV plant for troubleshooting or maintenance. The category "LVDC cable to skid" refers to the LVDC cables that connect the combiner boxes to the block inverter/transformer skid. The "Inverter skid" refers to the block inverter and block transformer that are typically collocated on the same skid. The skid further has the additional electrical equipment such as LVDC cable recombiner (combines all LVDC cables from the combiner boxes), auxiliary power supply to supply power for plant control and communication equipment, MVAC switchgear, and ring main unit (RMU) for forming ring electrical connection for MVAC power output. The "MVAC cable within section" refers to the MVAC cables (3 phase MVAC) that form ring electrical connection between the blocks. The "MVAC cable section to switch gear" refers to the MVAC cables from the last RMU in the ring connection to the MVAC power collector in the substation. The "MVAC switchgear" refers to the MVAC power collector in the substation. The "Tsfm+SF6+substation+SCADA" includes the transformer located in the substation that steps up voltage to the grid compatible voltage, the dielectric SF6 gas enabled high voltage switchgear that provide safe protection/disconnection between the substation transformer and the grid, all the infrastructure and equipment in substation that are required, and the Supervisory Control And Data Acquisition (SCADA) that is required for plant control.

The cost of the exemplary PV power plant design described in FIGS. 6-10 is broken out in the follow table.

| | LVDC cable, misc | DC-DC Converter | MVDC cable and connectors | Substation Inverter | Block Combiner | Substation | Misc. | Total |
|---|---|---|---|---|---|---|---|---|
| Cost (c/Wac) | **3.87** | **3.05** | **1.72** | **2.06** | **.19** | **2.54** | **.2** | **13.63** |

Notably, increasing the number of DC-DC converters and reducing the amount of LVDC cables results in a decrease in the cost of the PV power plant relative to the conventional design from 16.8 0/W to 13.63 ¢/W. The following table details the cost if the design is modified to increase the number of strings per row (e.g. from eights strings per row to twenty-four strings per row). As described previously, the length of a row is not limited by the farthest strings, unlike at least some known designs. The following table reflects the costs if twenty-four strings are used per row.

| | LVDC cable, misc | DC-DC Converter | MVDC cable and connectors | Substation Inverter | Block Combiner | Substation | Misc. | Total |
|---|---|---|---|---|---|---|---|---|
| Cost (c/Wac) | **.86** | **4.09** | **3.13** | **2.07** | **.15** | **2.57** | **.2** | **13.07** |

With twenty-four strings per row, the cost is further reduced to 13.07¢/W as shown in the table. Further, if the junction boxes are eliminated using connectors 100 of FIG. 10, the costs further decreases as follows.

| | LVDC cable, misc | DC-DC Converter | MVDC cable and connectors | Substation Inverter | Block Combiner | Substation | Misc. | Total |
|---|---|---|---|---|---|---|---|---|
| Cost (c/Wac) | **.86** | **3.74** | **3.13** | **2.07** | **.15** | **2.57** | **.2** | **12.73** |

Eliminating the junction boxes reduces the cost of each DC-DC converter, further reducing the overall cost of the PV plant. Future reductions in the cost of the MVDC cable are possible. For example, standardized cable lengths and connectors may further reduce costs. If the termination cost is reduced to $100 per cable, the cost is as follows.

| | LVDC cable, misc | DC-DC Converter | MVDC cable and connectors | Substation Inverter | Block Combiner | Substation | Misc. | Total |
|---|---|---|---|---|---|---|---|---|
| Cost (c/Wac) | **.86** | **3.74** | **2.04** | **2.07** | **.15** | **2.57** | **.2** | **11.63** |

As described above, the cost per watt of a PV power plant may be reduced significantly using the exemplary PV string layout described herein, from 16.8¢/W to as low as 11.63¢/W. The exemplary PV string layout is advantageous in that it allows longer rows, decreases the amount of LVDC cabling, reduces high amperage losses, and reduces the overall cost of a PV power plant.

Exemplary embodiments of a PV string layout and PV power plant are described above in detail. The system is not limited to the specific embodiments described herein, but rather, components of systems and/or steps of the methods may be utilized independently and separately from other components and/or steps described herein. For example, the configuration of components described herein may also be used in combination with other processes, and is not limited to practice with the systems and related methods as described herein. Rather, the exemplary embodiments can be implemented and utilized in connection with many applications where monitoring of a power circuit is desired.

Although specific features of various embodiments of the present disclosure may be shown in some drawings and not in others, this is for convenience only. In accordance with the principles of the present disclosure, any feature of a drawing may be referenced and/or claimed in combination with any feature of any other drawing.

This written description uses examples to disclose the embodiments of the present disclosure, including the best mode, and also to enable any person skilled in the art to practice the disclosure, including making and using any devices or systems and performing any incorporated methods. The patentable scope of the embodiments described herein is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

Various aspects and embodiments of the present invention are defined by the following numbered clauses:
1. A power generation architecture for a photovoltaic power plant, said architecture comprising:
   a plurality of photovoltaic blocks, each photovoltaic block comprising:
      a plurality of photovoltaic groups, each photovoltaic group comprising:
         a plurality of photovoltaic strings, each photovoltaic string operable to output low voltage, direct current (LVDC) electrical power at a string output; and
         a direct current (DC) to DC power converter having a converter input and a converter output, said converter input electrically coupled to said string output of each photovoltaic string, said DC to DC power converter operable to convert said LVDC electrical power to medium voltage, direct current (MVDC) electrical power at said converter output; and
      a combiner having a combiner input in electrical communication with each of said converter outputs of said plurality of photovoltaic groups and a combiner output, said combiner operable to combine said MVDC electrical power received at said combiner input to produce a block output at said combiner output; and
   a MVDC collector having a collector input and a collector output, said collector input electrically coupled to each combiner output and operable to combine each block output.
2. The architecture of clause 1, further comprising:
   a substation comprising:
   an inverter having an inverter input and an inverter output, said inverter input electrically coupled to said collector output and operable to convert MVDC electrical power at said inverter input to medium voltage alternating current (MVAC) at said inverter output; and
   a transformer having a transformer input electrically coupled to said inverter output and a transformer output, said transformer operable to transform said MVAC electrical power at said transformer input to a grid voltage.
3. The architecture of any preceding clause, wherein each photovoltaic group comprises only four photovoltaic strings.
4. The architecture of any preceding clause, wherein said plurality of photovoltaic groups numbers ninety six.
5. The architecture of any preceding clause, wherein said four photovoltaic strings are arranged in a rectangle and said direct current to direct current converter is physically positioned in a center of said rectangle.
6. The architecture of any preceding clause, wherein each photovoltaic string of a photovoltaic group is electrically coupled to said DC to DC power converter of said photovoltaic group by a low voltage direct current cable having the same length.
7. The architecture of any preceding clause, wherein said photovoltaic groups are arranged in a plurality of rows.
8. The architecture of any preceding clause, wherein each row has more than four photovoltaic groups.
9. The architecture of any preceding clause, wherein each photovoltaic group has two rows of photovoltaic strings.
10. The architecture of any preceding clause, wherein each photovoltaic string of a photovoltaic group are electrically coupled in a ring connection.
11. The architecture of any preceding clause, wherein each photovoltaic group of a row are electrically coupled in a ring connection.
12. The architecture of any preceding clause, wherein each DC to DC power converter outputs a voltage greater than 10,000 volts.
13. The architecture of any preceding clause, wherein each PV string outputs a voltage less than 1,500 volts.
14. A power generation architecture for use in a photovoltaic power plant, said architecture comprising:
   a first photovoltaic group comprising a first plurality of photovoltaic strings and a first direct current (DC) to DC converter having a first converter input electrically coupled to each photovoltaic string of said first plurality of photovoltaic strings; and
   a second photovoltaic group comprising a second plurality of photovoltaic strings and a second DC to DC converter having a second converter input electrically coupled to each photovoltaic string of said second plurality of photovoltaic strings;
   wherein said first photovoltaic group and said second photovoltaic group are physically arranged in a row and said first DC to DC power converter and said second DC to DC power converter are electrically coupled in a ring electrical connection.
15. The architecture of any preceding clause, wherein each DC to DC power converter includes only four photovoltaic strings connected to a respective converter input.
16. The architecture of any preceding clause, wherein each plurality of photovoltaic strings is arranged in a rectangle, and wherein each respective DC to DC power converter is physically positioned within said rectangle.
17. The architecture of any preceding clause, wherein each photovoltaic string of said first plurality of photovoltaic strings is electrically coupled to said converter input with a low voltage direct current cable, and wherein each low voltage direct current cable has the same length.
18. The architecture of any preceding clause, wherein said first photovoltaic group and said second photovoltaic group form two rows of photovoltaic strings.
19. The architecture of any preceding clause, further comprising:
   a third photovoltaic group comprising a third plurality of photovoltaic strings and a third DC to DC power converter having a third converter input electrically coupled to each photovoltaic string of said third plurality of photovoltaic strings; and
   a fourth photovoltaic group comprising a fourth plurality of photovoltaic strings and a fourth DC to DC power converter having a fourth converter input electrically coupled to each photovoltaic string of said fourth plurality of photovoltaic strings;
   wherein said first photovoltaic group, said second photovoltaic group, said third photovoltaic group, and said fourth photovoltaic group are arranged in a row and said first DC to DC power converter, said second DC to DC power converter, said third DC to DC power converter, and said DC to DC power converter are connected in a ring electrical connection.
20. The architecture of any preceding clause, wherein each DC to DC converter outputs a voltage greater than 10,000 volts.

## Claims

1. A power generation architecture for a photovoltaic power plant (54), said architecture comprising:
a plurality of photovoltaic blocks (42), each photovoltaic block (42) comprising:
a plurality of photovoltaic groups, each photovoltaic group comprising:
a plurality of photovoltaic strings (14), each photovoltaic string (14) operable to output low voltage, direct current (LVDC) electrical power at a string output; and
a direct current (DC) to DC power converter (40) having a converter input and a converter output, said converter input electrically coupled to said string output of each photovoltaic string (14), said DC to DC power converter (40) operable to convert said LVDC electrical power to medium voltage, direct current (MVDC) electrical power at said converter output; and
a combiner (16) having a combiner input in electrical communication with each of said converter outputs of said plurality of photovoltaic groups and a combiner output, said combiner (16) operable to combine said MVDC electrical power received at said combiner input to produce a block output at said combiner output; and
a MVDC collector (50) having a collector input and a collector output, said collector input electrically coupled to each combiner output and operable to combine each block output.

2. The architecture of claim 1, further comprising:
a substation (52) comprising:
an inverter (58) having an inverter input and an inverter output, said inverter input electrically coupled to said collector output and operable to convert MVDC electrical power at said inverter input to medium voltage alternating current (MVAC) at said inverter output; and
a transformer (60) having a transformer input electrically coupled to said inverter output and a transformer output, said transformer (60) operable to transform said MVAC electrical power at said transformer input to a grid voltage.

3. The architecture of claim 1 or claim 2, wherein each photovoltaic group comprises only four photovoltaic strings (14).

4. The architecture of any preceding claim, wherein said four photovoltaic strings (14) are arranged in a rectangle and said direct current to direct current converter (40) is physically positioned in a center of said rectangle.

5. The architecture of any preceding claim, wherein each photovoltaic string (14) of a photovoltaic group is electrically coupled to said DC to DC power converter (40) of said photovoltaic group by a low voltage direct current cable (38) having the same length.

6. The architecture of any preceding claim, wherein said photovoltaic groups are arranged in a plurality of rows (46,48).

7. The architecture of any preceding claim, wherein each row (46,48) has more than four photovoltaic groups.

8. The architecture of any preceding claim, wherein each photovoltaic string (14) of a photovoltaic group are electrically coupled in a ring connection.

9. The architecture of any preceding claim, wherein each photovoltaic group of a row (46,48) are electrically coupled in a ring connection.

10. A power generation architecture for use in a photovoltaic power plant, said architecture comprising:
a first photovoltaic group comprising a first plurality of photovoltaic strings (14) and a first direct current (DC) to DC converter (40) having a first converter input electrically coupled to each photovoltaic string (14) of said first plurality of photovoltaic strings (14); and
a second photovoltaic group comprising a second plurality of photovoltaic strings (14) and a second DC to DC converter (40) having a second converter input electrically coupled to each photovoltaic string (14) of said second plurality of photovoltaic strings (14);
wherein said first photovoltaic group and said second photovoltaic group are physically arranged in a row (46,48) and said first DC to DC power converter (40) and said second DC to DC power converter (40) are electrically coupled in a ring electrical connection.

11. The architecture of claim 10, wherein each DC to DC power converter (40) includes only four photovoltaic strings (14) connected to a respective converter input.

12. The architecture of claim 10 or claim 11, wherein each plurality of photovoltaic strings (14) is arranged in a rectangle, and wherein each respective DC to DC power converter (40) is physically positioned within said rectangle.

13. The architecture of any of claims 10 to 12, wherein each photovoltaic string (14) of said first plurality of photovoltaic strings (14) is electrically coupled to said converter input with a low voltage direct current cable (38), and wherein each low voltage direct current cable (38) has the same length.

14. The architecture of any of claims 10 to 13, wherein said first photovoltaic group and said second photovoltaic group form two rows (46,48) of photovoltaic strings (14).

15. The architecture of any of claims 10 to 14, further comprising:
a third photovoltaic group comprising a third plurality of photovoltaic strings (14) and a third DC to DC power converter (40) having a third converter input electrically coupled to each photovoltaic string (14) of said third plurality of photovoltaic strings (14); and
a fourth photovoltaic group comprising a fourth plurality of photovoltaic strings (14) and a fourth DC to DC power converter (40) having a fourth converter input electrically coupled to each photovoltaic string (14) of said fourth plurality of photovoltaic strings (14);
wherein said first photovoltaic group, said second photovoltaic group, said third photovoltaic group, and said fourth photovoltaic group are arranged in a row (46,48) and said first DC to DC power converter, said second DC to DC power converter, said third DC to DC power converter, and said DC to DC power converter (40) are connected in a ring electrical connection.
